# EUROPEAN PATENT APPLICATION

(11) **EP 2 916 278 A1**
(43) Date of publication of application: **09.09.2015**
(21) Application number: 13851429.4
(22) Date of filing: 25.10.2013
(51) Int. Cl.: G06Q 20/00, G07F 7/10

(54) **PROCESSING METHOD FOR FAILING TO READ DATA FROM NON-CONTACT IC CARD AND DEVICE FOR IMPLEMENTING THE METHOD**

(30) Priority: 31.10.2012 CN 201210426067
(71) Applicant: China Unionpay Co., Ltd, Shanghai 200135 (CN)
(72) Inventor: HUI, Chunye, Shanghai 200135 (CN); WANG, Feng, Shanghai 200135 (CN); DING, Linrun, Shanghai 200135 (CN); XIAO, Bo, Shanghai 200135 (CN); LI, Chunhuan, Shanghai 200135 (CN); ZHAN, Chengchu, Shanghai 200135 (CN); WANG, Hongjian, Shanghai 200135 (CN)
(74) Representative: Seemann & Partner
(86) International application number: PCT/CN2013/085961
(87) International publication number: WO 2014/067425

(57) **Abstract**

The invention relates to the data processing technology, and in particular, to a method for processing failure to reading non-contact IC card data by a transaction terminal and an apparatus for implementing the method. In order to achieve the above object, in the processing method according to the invention, the transaction terminal performs the following steps in the above processing method: instructing the non-contact IC to update a transaction record associated with the current transaction; reading the latest transaction record from the non-contact IC; if the record is not successfully read, the information on the current transaction is stored, and an instruction that it is required to re-read the latest transaction record is generated; and if the re-read non-contact IC card is consistent with the non-contact IC that is not successfully read and the re-read latest transaction record corresponds to the information on the current transaction that is stored in the transaction terminal, it is determined whether the non-contact IC should be instructed again to update the transaction record associated with the current transaction, based on the current balance in the latest transaction record and the information on the current transaction.

## Description

### Related applications

This application is a translation of the international application PCT/CN2013/085961 filed on October 25, 2013, which in turn claims priority from the Chinese application with the official file number 201210426067, filed on October 31, 2012. The entire contents of both applications are incorporated herein by reference.

### TECHNICAL FIELD

The invention relates to the data processing technology, and in particular, to a method for processing failure to read non-contact IC card data by a transaction terminal and an apparatus for implementing the same.

### BACKGROUND

An off-line consumption transaction of non-contact electronic cash is sensitive to the retention time of card swiping. If the time of card swiping of non-contact IC card is too short, a transaction failure is likely to happen; and if the time of card swiping is required to be too long, it will impair client's experience. The following situation might occur during a certain time window: when a non-contact IC card leaves a transaction terminal or machine, a success of transaction is shown on the card side (e.g., money is successfully deducted from the non-contact IC card), but the transaction terminal never receives a recent transaction record returned from the card and thus makes a determination that this transaction fails. Such a situation is often called "card flashing". In case of card flashing, since the balance in the card is decreased while the transaction terminal determines that the transaction is not successful, the card holder has to request return of deducted money with card issuer, resulting in an unpopular experience of the client.

Currently, the ways of solving the "card flashing" problem generally aim to narrow the time window in which the card flashing situation occurs as much as possible. For this purpose, the following technical measures are taken: (1) when the non-contact IC card is personalized, the length of the last record is adjusted to be as short as possible; (2) the private key length of IC card is reduced so as to shorten time of transaction; (3) a prompt device (e.g., an indicator light or a voice device) is provided on the transaction terminal, which informs the card holder to take the card with him/her when the transaction terminal receives the last record returned from the card; (4) the operational speed of the chip inside the non-contact IC card is increased.

Although these approaches can greatly reduce the probability of "card flashing", the problem cannot be completely eradicated.

In addition, another possible way of solving this problem is to modify the specification of not-contact IC card, and improve robustness of data processing system by specifying that more detailed transaction information be stored in the card. However, this solution does not apply to existing cards that have already been issued, especially given the fact that there is a tremendous amount of existing cards, which means a huge cost of retrofit.

### SUMMARY OF THE INVENTION

An object of the invention is to provide a method for processing failure to read data from a non-contact IC card by a transaction terminal, which can eliminate the adverse effects caused by the "card flashing" problem at a low cost of implementation.

In order to achieve the above object, the transaction terminal performs the following steps in the above processing method:
instructing the non-contact IC to update a transaction record associated with a current transaction;
reading the latest transaction record from the non-contact IC, and if the latest transaction record is not successfully read, storing information on the current transaction and generating an instruction that it is required to re-read the latest transaction record; and
if a re-read non-contact IC card is consistent with the non-contact IC that is not successfully read and the re-read latest transaction record corresponds to the information on the current transaction that is stored in the transaction terminal, it is determined whether the non-contact IC should be instructed to update the transaction record associated with the current transaction again, based on the current balance in the latest transaction record and the information on the current transaction.

Preferably, in the above processing method, the information on the current transaction comprises card number, transaction certificate (TC), application transaction counter (ATC), random number, dynamic signature data and card record.

Preferably, in the above processing method, it is determined whether the re-read non-contact IC card is consistent with the non-contact IC that is not successfully read based on the card number.

Preferably, in the above processing method, if the re-read latest transaction record has the same count value as the application transaction counter in the information on the current transaction, it is determined that the re-read latest transaction record corresponds to the information on the current transaction.

Preferably, in the above processing method, it is determined whether the latest transaction record should be updated again based on the current balance in the latest transaction record and the information on the current transaction in the following manner:
if the current balance is not equal to a different between the balance of last transaction and the amount of the current transaction, the non-contact IC card is instructed again to update the transaction record associated with the current transaction.

The above object can be also achieved by the following embodiment.

A method for processing failure to read data from a non-contact IC card by a transaction terminal, wherein the transaction terminal performs the following steps:
when the non-contact IC card is detected, it is determined whether the non-contact IC card is in a list of failure to read data stored by the transaction terminal;
if the non-contact IC card is in the list of failure to read data stored by the transaction terminal, it is determined whether the latest transaction record read from the non-contact IC has corresponding transaction information in the transaction terminal, and whether a time period for the corresponding transaction information, from a time point at which the failure to read data from the non-contact card is recorded to the current time point, is not timed-out; and
if it is determined that there is a corresponding transaction information which is not timed-out, it is determined whether the non-contact IC should be instructed to again update the transaction record associated with the corresponding transaction information, based on the balance in the latest transaction record and the corresponding transaction information.

The above embodiment is particularly applicable to the following situation: after a certain card has the "card flashing" problem, other cards are swiped at the same transaction terminal. Specifically, according to the above embodiment, other cards can be also successfully swiped in such a situation, and the card that has the "card flashing" problem can be also swiped again at the same transaction terminal so as to determine whether the transaction record is updated. In addition, in the above embodiment, the safety of transaction is improved by increasing constraints on the time of re-swiping card after the "card flashing" has happened.

Another object of the invention is to provide a transaction terminal which can eliminate the adverse effects caused by the "card flashing" problem at a low cost of implementation.

In order to achieve the above object, a transaction terminal according to an embodiment of the invention comprises:
a reader-writer that is adapted to be in communication with a non-contact IC card;
a storage; and
a processor coupled to the reader-writer and the storage, wherein the processor is configured to: when the reader-writer does not successfully read a transaction record associated with a current transaction, store information on the current transaction in the storage and generate an instruction that it is required to re-read the transaction record; and the processor is further configured to: if a re-read non-contact IC read by the reader-writer is consistent with the non-contact IC that is not successfully read and the re-read latest transaction record corresponds to the information on the current transaction that is stored in the transaction terminal, determine whether to generate an instruction to update the transaction record associated with the current transaction, based on the current balance in the latest transaction record and the information on the current transaction. The above transaction terminal can be a swipe machine or a ticket checking gate machine.

The above transaction terminal can be a swipe machine or a ticket checking gate machine.

The above object of the invention can be also achieved through the following embodiment.

A transaction terminal, comprising:
a reader-writer that is adapted to be in communication with a non-contact IC card;
a storage; and
a processor coupled to the reader-writer and the storage, wherein the processor is configured to determine whether the following conditions are satisfied when the reader-writer detects the non-contact IC card:
   the non-contact IC card is in a list of failure to read data stored by the transaction terminal;
   the latest transaction record read from the non-contact IC has corresponding transaction information in the transaction terminal; and
   a time period for the corresponding transaction information, from a time point at which the failure to read data from the non-contact card is recorded to the current time point, is not timed-out,
   wherein the processor is further configured to determine whether to generate an instruction to update the transaction record associated with the corresponding transaction information based on the balance in the latest transaction record and the corresponding transaction information, if the conditions are all satisfied.

### BRIEF DESCRIPTION OF THE DRAWINGS

The above and other objects and advantages of the invention will be more fully understood from a detailed description given below with reference to the accompanying drawings.
Fig. 1 is a flowchart of a method for processing failure to read data from a non-contact IC card according to an embodiment of the invention.
Fig. 2 is a flowchart of a special processing routine in the embodiment shown in Fig. 1.
Fig. 3 is a flowchart of a method for processing failure to read data from a non-contact IC card according to another embodiment of the invention.
Fig. 4 is a flowchart of a first processing routine in the embodiment shown in Fig. 3.
Fig. 5 is a flowchart of a second processing routine in the embodiment shown in Fig. 3.
Fig. 6 is a schematic view of a transaction terminal according to another embodiment of the invention.

### DETAILED DESCRIPTION

In a typical transaction process, a transaction terminal (e.g., a swipe machine or a ticket checking gate machine) instructs a non-contact IC card to update a transaction record thereof. As a response, the card will perform an update operation (e.g., deducting the amount of current transaction from the balance of card). According to an embodiment of the invention, if the transaction terminal does not successfully read the updated transaction record, a special processing routine will be initiated; otherwise, a subsequent normal routine will be continued, and the whole transaction process will be completed.

According to the embodiment of the invention, in the above special processing routine, the transaction terminal will store transaction information associated with the current transaction, and inform the card holder to re-swipe the card to obtain the latest transaction record stored at the card. Then, the transaction terminal determines whether the card has performed the update operation while only failure to successfully return the updated transaction record. If it is determined that the update operation has been correctly performed, a subsequent normal routine will be continued; otherwise, the card holder is informed to re-swipe the card.

According to the embodiment of the invention, whether the update operation has been correctly performed can be determined based on a self-consistency between the current balance in the latest transaction record and transaction information stored at the transaction terminal. That is, if the current balance is equal to a difference between the balance in the last transaction and the amount of the current transaction, it can be determined that the update operation is correct.

The embodiment of the invention will be described below with reference to the accompanying drawings.

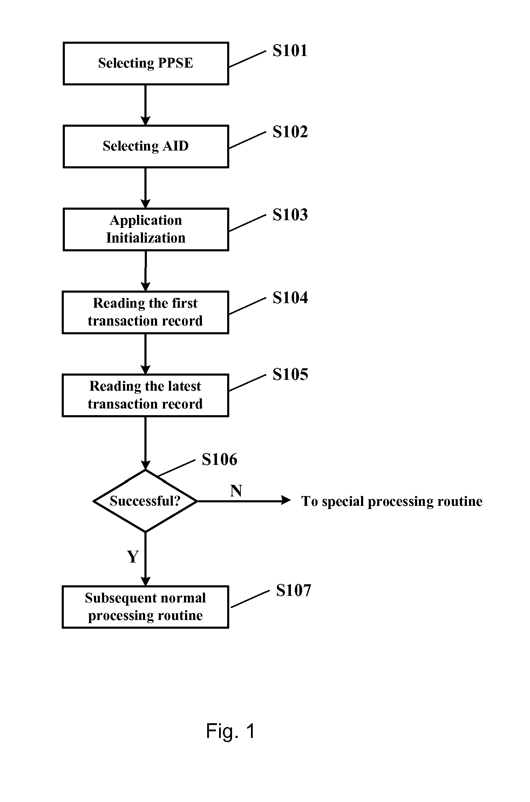

Fig. 1 is a flowchart of a method for processing failure to read data from a non-contact IC card according to an embodiment of the invention.

As shown in Fig. 1, at the initial stage of operation, the transaction terminal initiates a normal processing routine at step S101 by selecting a proximity payment system environment (PPSE). Then, at step 102, an application identifier (AID) is selected, and at step S103, an application initialization operation is performed (e.g., instructing the non-contact IC card to deduct the amount of the current transaction from the balance). Next, the transaction terminal performs an operation of reading the first transaction record from the non-contact IC and the operation of reading the last transaction record from the non-contact IC at steps S104 and S105 respectively.

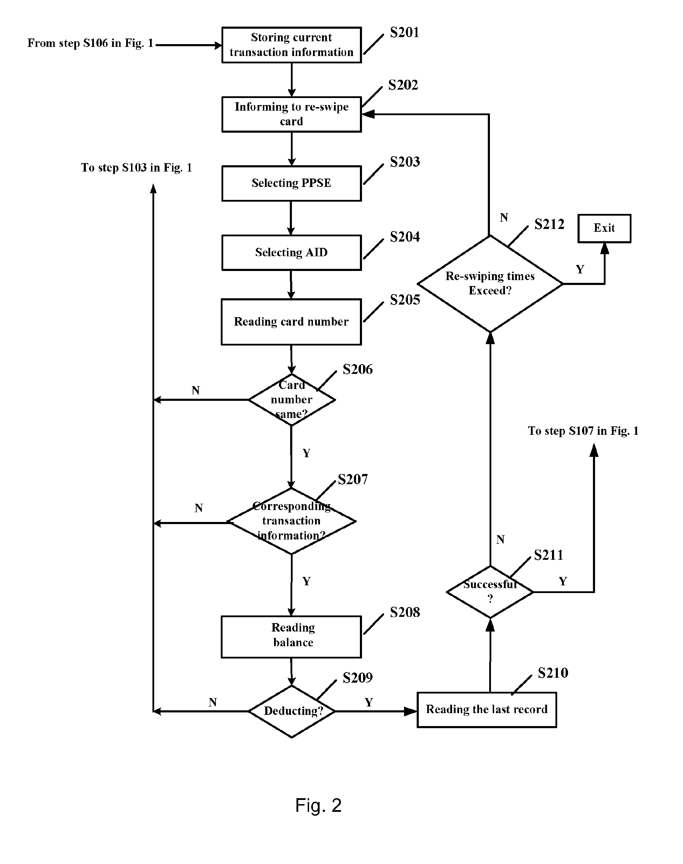

At step S106, the transaction terminal determines whether the last transaction record has been successfully read. If it is successfully read, step S107 is executed and a subsequent normal processing routine is continued; otherwise, it is determined that there is an abnormal transaction and the process proceeds to a special processing routine that will be described below in detail with reference to Fig. 2.

Fig. 2 is a flowchart of the special processing routine in the embodiment shown in Fig. 1.

With reference to Fig. 2, when the process turns to the special processing routine from the step S106 in Fig. 1, the transaction terminal firstly stores the transaction information associated with the current abnormal transaction at step S201. For example, the transaction information can be card number, transaction certificate (TC), application transaction counter (ATC), random number, dynamic signature data and card record of the non-contact IC card, etc. Then, at step S202, the transaction terminal prompts the card holder to re-swipe the card on a display screen. At step S203, when the transaction terminal detects the card, the card will be powered on again and a proximity payment system environment (PPSE) is selected; and at step S204, an application identifier (AID) is selected.

Then, at step S205, the transaction terminal reads the card number from the card and step S206 is executed, in which the read card number is compared with the card number in the transaction information stored at step S201. At step 206, if the two card numbers match with each other, it means that the card that is currently swiped is the card to which the abnormal transaction happens, and step S207 is executed. Otherwise, it means that the card that is currently being swiped is a new card, and step S103 in Fig. 1 is executed so as to perform the application initialization operation.

At step S207, the transaction terminal determines whether the last transaction record in the card corresponds to the transaction information stored at step S201. Preferably, the following way can be used to realize such a determination: the transaction terminal reads the count value of the application transaction counter (ATC) in the card (e.g., by a GetData command) and compares it with the ATC value in the transaction information. If they match, step S208 is executed; otherwise, step S103 in Fig. 1 is executed so as to perform the application initialization operation.

At step S208, the transaction terminal reads the current balance, and at step S209, the transaction terminal determines whether the amount of transaction has been deducted from the card when the present abnormal transaction occurs. If it is determined at step S209 that the amount is deducted, the process proceeds to step S210; otherwise, the process proceeds to step S103 in Fig. 1. Preferably, the transaction terminal reads the current balance in the last transaction record in the card by a Get Data command, for example, and determines whether current balance is equal to the difference between the balance of the last transaction in the transaction information stored at step S201 and the amount of the current transaction; if equal, the process proceeds to step S210; otherwise, the process proceeds to step S103.

At step S210, the transaction terminal will read the last transaction record or the latest transaction record in the card. Then, at step S211, it is determined whether the last transaction record or the latest transaction record is successfully read; if it is successfully read, the process proceeds to step S107 in Fig. 1, and a subsequent normal processing routine is then performed; otherwise, the process proceeds to step S212, in which it is determined whether the number of times of re-swiping the card exceeds a predetermined number of times (e.g., 3 times). If the predetermined number of times is exceeded, the entire transaction processing routine is closed; otherwise, the process turns to step S202 to inform the card holder to re-swipe the card.

When swiping a card in unattended buses, subways or the like where there is a large passenger flow, a situation which often occurs is that: a "card flashing" problem occurs to the card of a previous card holder and he does not re-swipe his card immediately, and the next card holder swipes his card again at this transaction terminal. The following embodiment of the invention can be well applied to the above situation and will be further described below.

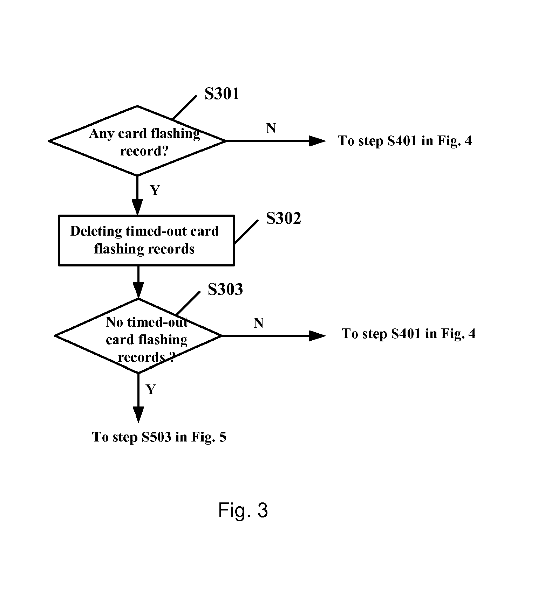

Fig. 3 is a flowchart of a method for processing failure to read data from a non-contact IC card according to another embodiment of the invention.

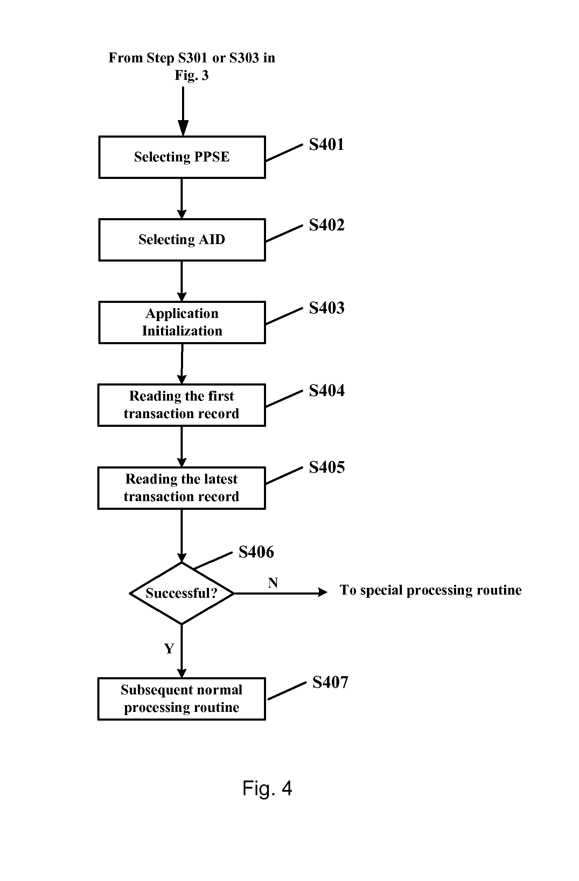

As shown in Fig. 3, at step S301, when the transaction terminal detects the non-contact IC card, it firstly checks whether there is a record of "card flashing" without successfully re-swiping the card at the transaction terminal. Preferably, the traction information of these cards to which abnormal transactions have happened can be stored in the storage of the transaction terminal in the form of list (referred to as list of failure to read data or list of card flashing record). Each card flashing record in the list corresponds to one of the cards to which "card flashing" has happened, and contains the transaction information of card at the time of abnormal transaction. The transaction information for example comprises but not limited to card number, transaction certificate (TC), application transaction counter (ATC), random number, dynamic signature data and card record of the non-contact IC card, etc. If a card flashing record is discovered at step S301, the process proceeds to step S302; otherwise, the process proceeds to a first processing routine which will be described below with reference to Fig. 4.

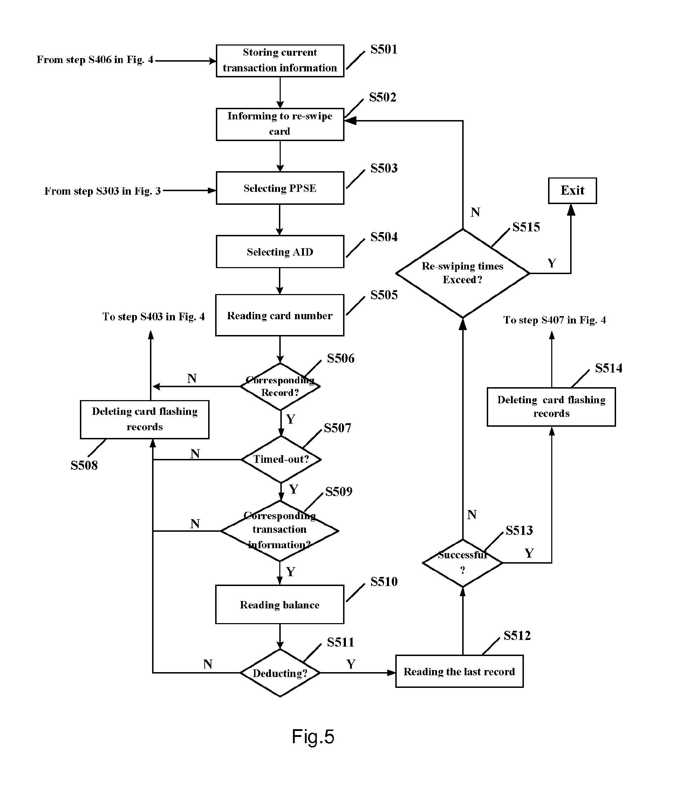

At step S302, the transaction terminal deletes all the timed-out card flashing records in the list of failure to read data. As to "timed-out" card flashing record, it means such cards which records that the time period from the time when the "card flashing" happens to the present time point has exceeds a predetermined time period. Then, the process proceeds to step S303, at which the transaction terminal determines whether there is non-timed-out card flashing record in the list of failure to read data. If not, the process proceeds to a first processing routine; otherwise, the second processing routine which will be described below with reference to Fig. 5 is performed.

Fig. 4 is a flowchart of the first processing routine in the embodiment shown in Fig. 3.

As shown in Fig. 4, at step S401, the first processing routine is started by selecting a proximity payment system environment (PPSE). Then, at step S402, an application identifier (AID) is selected, and at step S403, an application initialization operation is performed (e.g., instructing the non-contact IC card to deduct the amount of the current transaction from the balance). Next, the transaction terminal performs an operation of reading the first transaction record from the non-contact IC and the operation of reading the last transaction record from the non-contact IC at steps S404 and S405 respectively.

At step S406, the transaction terminal determines whether the last transaction record or the latest transaction record is successfully read; if it is successfully read, the process proceeds to step S407, and a subsequent normal processing routine is then performed; otherwise, it is determined that the transaction is abnormal and the second processing routine which will be described below in detail with reference to Fig. 5 is performed.

Fig. 5 is a flowchart of the second processing routine in the embodiment shown in Fig. 3.

With reference to Fig. 5, when the process turns to the second processing routine from the step S406 in Fig. 4, the transaction terminal firstly stores the transaction information associated with the current abnormal transaction at step S501. As described above, the transaction information can be stored in the transaction terminal in the form of list. Then, at step S502, the transaction terminal prompts the card holder to re-swipe the card on a display screen. At step S503, when the transaction terminal detects the card, the card will be powered on again and a proximity payment system environment (PPSE) is selected; and at step S504, an application identifier (AID) is selected.

It is noted that when it is determined at step S303 of Fig. 3 that there is a non-timed-out card flashing record, the processing routine turns to step S503 in the second processing routine rather than step S501.

After step S504, the process proceeds to step S505 in which the transaction terminal reads card number from the card, and step S506 is executed, in which a search is made in the card flashing record list in the transaction terminal so as to determine whether this is a record corresponding to the read card number. At step S506, if there is matching card flashing record in the card flashing record list, it means that the card that is currently being swiped is the card to which the abnormal transaction happens, and step S207 is executed. Otherwise, it means that the card that is currently swiped is a new card, and step S703 in Fig. 4 is executed so as to perform the application initialization operation.

At step S507, the transaction terminal checks whether the matching card flashing record is timed-out, i.e., whether the time period from the time when the "card flashing" happens to the present time point has exceeds a predetermined time period. If the card flashing record is timed-out, the process proceeds to step S508; otherwise, the process proceeds to step S509. It is noted that the predetermined time period mentioned herein can be set at the same vale as the time period mentioned at step S302.

At step S508, the transaction terminal deletes the matching card flashing records from the list of failure to read data, and then step S403 in Fig. 4 is executed so as to perform an application initialization operation.

At step S509, the transaction terminal determines whether the last transaction record in the card corresponds to the matching card flashing record. Preferably, it can be realized in the following way: the transaction terminal reads the count value of the application transaction counter (ATC) in the card (e.g., by a GetData command) and compares it with the ATC value in the matching card flashing record. If they match, step S510 is executed; otherwise, step S508 is executed.

At step S510, the transaction terminal reads the current balance from the card, and at step S511, the transaction terminal determines whether the amount of transaction has been deducted from the card when the present abnormal transaction occurs. If it is determined at step S511 that the amount is deducted, the process proceeds to step S512; otherwise, the process proceeds to step S508. Preferably, the transaction terminal reads the current balance in the last transaction record in the card by a Get Data command, for example, and determines whether current balance is equal to the difference between the balance of the last transaction stored in the matching card flashing record and the amount of the current transaction; if equal, the process proceeds to step S512; otherwise, the process proceeds to step S508.

At step S512, the transaction terminal will read the last transaction record or the latest transaction record in the card. Then, at step S513, it is determined whether the last transaction record or the latest transaction record is successfully read; if it is successfully read, the process proceeds to step S514; otherwise, the process proceeds to step S515, in which it is determined whether the number of times of re-swiping the card exceeds a predetermined number of times. If it determined at step S515 that the predetermined number of times is exceeded, the entire transaction processing routine is closed; otherwise, the process turns to step S502 to inform the card holder to re-swipe the card.

At step S514, the transaction terminal deletes the corresponding card flashing records from the list of failure to read data, and then step S407 in Fig. 4 is executed so as to perform a subsequent normal processing routine.

It is noted that in this embodiment, the measures of limiting the storing time of card flashing records within a certain time period (e.g., the execution of steps S302, S303 and S507) is optional. When there is no limit on the time of re-swiping the card after "card flash-ing" happens, the above measures can be omitted. In addition, optionally, the number of card flashing records stored at the transaction terminal can be also limited (e.g., storing the card flashing records in a First In First Out manner (FIFO)).

The transaction terminal adapted to implement the method described above with reference to the embodiments of Figs. 1-5 will be described below.

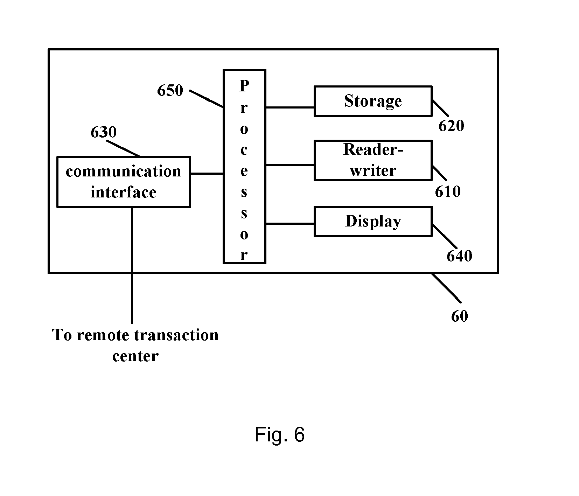

As shown in Fig. 6, the transaction terminal mentioned herein comprises a reader-writer 610, a storage 620, a communication interface 630, a display 640 and a processor 650 that is coupled with the above units.

Under the control of the processor 650, the reader-writer 610, which serves as an interface between the transaction terminal and the non-contact IC card, is responsible for reading data from the non-contact IC card (e.g., executing the above described steps of reading transaction records S104, S105, S210, S404, S405 and S512, steps of reading card number S206, S505, steps of reading the balance S208, S510, etc.) and writing data in the non-contact IC card (e.g., instructing the non-contact IC card to deduct the amount of transaction from the current balance).

The storage 620 stores application programs that are required for operation of the processor 650 and data associated withtransactions (e.g., the above described transaction information and card flashing records, etc.). When the power is on so as to start operation, the processor 650 reads the application programs in the storage 620 to the memory and starts operations. For example, when "card flashing" happens, the processor 650 stores relevant transaction information or card flashing records in the storage 620 (e.g., executing steps S201 and S501, etc.); when performing application programs, transaction information or card flashing records are read from the storage 620 according to a command (e.g., executing steps S206, S207, S209, S301, S506, S507, S509, S511, etc.); and modifying the data stored in the storage 620 (e.g., executing steps S302, S508, S513. etc.).

Under the control of the processor 650, the communication interface 630 communicates with a remote transaction center so as to achieve receipt and transmission of transaction data as well as such operations of update and service of transaction terminal application programs.

Under the control of the processor 650, the display 640 displays corresponding transaction information to the user (e.g., executing step S202 of informing the card holder to enter transaction password and step S502 of informing the card holder to re-swipe the card, etc.).

By loading an appropriate application program, the processor 650 can be configured to have the following processing ability: when the reader-writer 610 does not successfully read the last record, the processor 650 stores transaction information associated with the current transaction in the storage 620 and generates an instruction to re-swipe the card; when executing the special processing routine shown in Fig. 2, the processor 650 determines whether the non-contact IC card re-read by the reader-writer 610 and the non-contact IC card that is not successfully read have the same card number and whether the re-read latest transaction record corresponds to the information on the current transaction stored in the storage 620; if they correspond to each other, it will be determined whether to continue a subsequent normal processing routine or to inform the card holder to re-swipe the card, based on the current balance in the latest transaction record and the information on the current transaction.

In addition, by loading an appropriate application program, the processor 650 can be further configured to have the following processing ability: when the reader-writer receives an indication that there is non-contact IC card, the processor 650 executes the method shown in Figs. 3-5. Briefly, the processor 650 is configured to determine the following conditions:
(1) whether the non-contact IC card is in a card flashing record or a list of failure to read data stored in the storage 620;
(2) whether the latest transaction record read by the non-contact IC card has a corresponding transaction information in the card flashing record stored in the storage; and
(3) whether the time period experienced by the corresponding transaction information from the time point when the non-contact IC card was recorded as failed in reading data to the current time point is timed-out.

When the above three conditions are determined to be satisfied at the same time, the processor 650 will determine whether to continue a subsequent normal processing routine or to inform the card holder to re-swipe the card, based on the balance in the latest transaction record and the corresponding transaction information.

Since the invention can be carried out in various ways without departing from a basic spirit of the invention, the specific embodiments as described above are merely illustrative rather than limiting. The scope of the invention is defined by the appended claims, and various changes or modifications to the above described embodiments will fall within the scope of protection defined by the appended claims.

## Claims

1. A method for processing failure to read data from a non-contact IC card by a transaction terminal, **characterized in that** the transaction terminal performs the following steps:
instructing the non-contact IC to update a transaction record associated with a current transaction;
reading the latest transaction record from the non-contact IC, and if the latest transaction record is not successfully read, storing information on the current transaction and generating an instruction that it is required to re-read the latest transaction record; and
if a re-read non-contact IC card is consistent with the non-contact IC that is not successfully read and the re-read latest transaction record corresponds to the information on the current transaction that is stored in the transaction terminal, it is determined whether the non-contact IC should be instructed to update the transaction record associated with the current transaction again, based on the current balance in the latest transaction record and the information on the current transaction.

2. The method according to claim 1, wherein the information on the current transaction comprises card number, transaction certificate (TC), application transaction counter (ATC), random number, dynamic signature data and card record.

3. The method according to claim 2, wherein it is determined whether the re-read non-contact IC card is consistent with the non-contact IC that is not successfully read based on the card number.

4. The method according to claim 1, wherein if the re-read latest transaction record has the same count value as the application transaction counter in the information on the current transaction, it is determined that the re-read latest transaction record corresponds to the information on the current transaction.

5. The method according to claim 1, wherein it is determined whether the latest transaction record should be updated again based on the current balance in the latest transaction record and the information on the current transaction in the following manner:
if the current balance is not equal to a different between the balance of last transaction and the amount of the current transaction, the non-contact IC card is instructed to update the transaction record associated with the current transaction again.

6. A transaction terminal, **characterized in that** comprising:
a reader-writer that is adapted to be in communication with a non-contact IC card;
a storage; and
a processor coupled to the reader-writer and the storage, wherein the processor is configured to: when the reader-writer does not successfully read a transaction record associated with a current transaction, store information on the current transaction in the storage and generate an instruction that it is required to re-read the transaction record; and the processor is further configured to: if a re-read non-contact IC read by the reader-writer is consistent with the non-contact IC that is not successfully read and the re-read latest transaction record corresponds to the information on the current transaction that is stored in the transaction terminal, determine whether to generate an instruction to update the transaction record associated with the current transaction, based on the current balance in the latest transaction record and the information on the current transaction.

7. The transaction terminal according to claim 6, wherein the transaction terminal is a swipe machine or a ticket checking gate machine.

8. The transaction terminal according to claim 6, wherein the information on the current transaction comprises card number, transaction certificate (TC), application transaction counter (ATC), random number, dynamic signature data and card record.

9. The transaction terminal according to claim 7, wherein the processor determines whether the re-read non-contact IC card is consistent with the non-contact IC that is not successfully read based on the card number.

10. The transaction terminal according to claim 6, wherein if the re-read latest transaction record has the same count value as the application transaction counter in the information on the current transaction, it is determined that the re-read latest transaction record corresponds to the information on the current transaction.

11. The transaction terminal according to claim 6, wherein the processor is further configured to determine whether to generate an instruction to update the latest transaction record again based on the current balance in the latest transaction record and the information on the current transaction in the following manner:
if the current balance is not equal to a different between the balance of last transaction and the amount of the current transaction, the non-contact IC card is instructed to update the transaction record associated with the current transaction again.

12. A method for processing failure to read data from a non-contact IC card by a transaction terminal, **characterized in that** the transaction terminal performs the following steps:
when the non-contact IC card is detected, it is determined whether the non-contact IC card is in a list of failure to read data stored by the transaction terminal;
if the non-contact IC card is in the list of failure to read data stored by the transaction terminal, it is determined whether the latest transaction record read from the non-contact IC has corresponding transaction information in the transaction terminal, and whether a time period for the corresponding transaction information, from a time point at which the failure to read data from the non-contact card is recorded to the current time point, is not timed-out; and
if it is determined that there is a corresponding transaction information which is not timed-out, it is determined whether the non-contact IC should be instructed to again update the transaction record associated with the corresponding transaction information, based on the balance in the latest transaction record and the corresponding transaction information.

13. A transaction terminal, **characterized by** comprising:
a reader-writer that is adapted to be in communication with a non-contact IC card;
a storage; and
a processor coupled to the reader-writer and the storage, wherein the processor is configured to determine whether the following conditions are satisfied when the reader-writer detects the non-contact IC card:
the non-contact IC card is in a list of failure to read data stored by the transaction terminal;
the latest transaction record read from the non-contact IC has corresponding transaction information in the transaction terminal; and
a time period for the corresponding transaction information, from a time point at which the failure to read data from the non-contact card is recorded to the current time point, is not timed-out,
wherein the processor is further configured to determine whether to generate an instruction to update the transaction record associated with the corresponding transaction information based on the balance in the latest transaction record and the corresponding transaction information, if the conditions are all satisfied.
